# EUROPÄISCHE PATENTANMELDUNG

(11) **EP 1 635 302 A1**
(43) Veröffentlichungstag der Anmeldung: **15.03.2006**
(21) Anmeldenummer: 05018799.6
(22) Anmeldetag: 30.08.2005
(51) Int. Cl.: G07F 7/10

(54) **Speicherkarte und Verfahren zum Abfragen von Informationen von einer Speicherkarte**

(30) Priorität: 09.09.2004 US 937484
(71) Anmelder: Sauer, Dietmar, 78148 Gütenbach (DE)
(72) Erfinder: Sauer, Dietmar, 78148 Gütenbach (DE)
(74) Vertreter: Vièl, Christof

(57) **Zusammenfassung**

Die Erfindung betrifft eine Speicherkarte zum Speichern von Informationen mit einem ersten und einem zweiten Speichermittel und ein Verfahren zum Abfragen von Informationen von einer Speicherkarte mit ersten und zweiten Speichermitteln.

Um eine Speicherkarte zu schaffen, die auch im Falle eines Diebstahls der Speicherkarte eine bessere Sicherheit bietet, wird im Rahmen der Erfindung vorgeschlagen, daß Mittel zum Abfragen der Informationen eines von dem Nutzungsberechtigten getragenen Identifizierungselementes und Mittel zum Vergleichen dieser Informationen mit auf dem zweiten Speichermittel gespeicherten Informationen vorgesehen sind und daß bei positiver Identitätsprüfung das erste Speichermittel durch das zweite Speichermittel zum Datenaustausch freischaltbar ist.

Es besteht also eine Hierarchie zwischen den Speichermitteln: Erst nach positiver Identitätsprüfung gibt das zweite Speichermittel den Austausch von auf dem ersten Speichermittel gespeicherten Daten frei, wobei diese Identitätsprüfung durch Abgleich von Informationen eines von dem Nutzungsberechtigten getragenen Identifizierungselementes mit auf dem zweiten Speichermittel gespeicherten Informationen erfolgt. Dies bedeutet, daß die Speicherkarte praktisch prüft, ob der Nutzungsberechtigte dem Datenaustausch beiwohnt oder ein Dritter, der die Karte unbefugt benutzt.

## Beschreibung

Die Erfindung betrifft eine Speicherkarte zum Speichern von Informationen mit einem ersten und einem zweiten Speichennittel und ein Verfahren zum Abfragen von Informationen von einer Speicherkarte mit ersten und zweiten Speichermitteln.

Aus der DE 198 17 895 A1 ist ein Mobilfunkendgerät bekannt, in dem mindestens eine Zugangsnummer zu einem Telekommunikations-Vermittlungsdienst und eine korrespondierende persönliche Identifizierungsnummer abgespeichert sind, wobei das Mobilfunkendgerät nach bereits erfolgter Authentifikation gegenüber dem Mobilfunknetz zum Kommunikationsaufbau die Zugangsnummer und die persönliche Identifizierungsnummer bereitstellt und absendet.

Diese Vorrichtung hat wie viele andere speicherkartengestützte Anwendungen den Nachteil, daß bei Diebstahl der Vorrichtung bzw. der Speicherkarte bis zu einer eventuellen Sperrung ein Mißbrauch möglich ist. Bei Bankkarten stellt sich dieses Problem auch: Es kann dort entweder die Unterschrift gefälscht werden (was durch die auf der Karte angebrachte Unterschrift noch erleichtert wird) oder aber die persönliche Kennzahl durch Beobachtung oder Manipulation der Eingabegeräte in Erfahrung gebracht werden und dann nach Diebstahl der Karte diese mißbraucht werden. Dies führt zu hohen Zahlungsausfallen.

Aufgabe der Erfindung ist es somit, eine Speicherkarte zu schaffen, die auch im Falle eines Diebstahls der Speicherkarte eine bessere Sicherheit bietet.

Dies wird erfindungsgemäß dadurch gelöst, daß Mittel zum Abfragen der Informationen eines von dem Nutzungsberechtigten getragenen Identifizierungselementes und Mittel zum Vergleichen dieser Informationen mit auf dem zweiten Speichermittel gespeicherten Informationen vorgesehen sind und daß bei positiver Identitätsprüfung das erste Speichermittel durch das zweite Speichermittel zum Datenaustausch freischaltbar ist.

Es besteht also eine Hierarchie zwischen den Speichermitteln: Erst nach positiver Identitätsprüfung gibt das zweite Speichermittel den Austausch von auf dem ersten Speichermittel gespeicherten Daten frei, wobei diese Identitätsprüfung durch Abgleich von Informationen eines von dem Nutzungsberechtigten getragenen Identifizierungselementes mit auf dem zweiten Speichermittel gespeicherten Informationen erfolgt. Dies bedeutet, daß die Speicherkarte praktisch prüft, ob der Nutzungsberechtigte dem Datenaustausch bei wohnt oder ein Dritter, der die Karte unbefugt benutzt. Hierdurch wird der Mißbrauch von Speicherkarten deutlich erschwert, da der Besitz der Speicherkarte noch keine Benutzung ermöglicht. Es muß nämlich zusätzlich das Identifizierungselement im direkten Umfeld der Speicherkarte vorliegen.

Dies ist bei vielen Anwendungen von Speicherkarten von Bedeutung, seien es Geld- oder Kreditkarten, Mitgliedskarten von Krankenkassen, Karten mit Krankendaten, Persanalausweise oder sonstige sicherheitsrelevante Speicherkarten.

Eine Ausgestaltung der Erfindung besteht darin, daß das erste und das zweite Speichermittel Speicherchips sind.

Statt beide Speichermittel auf einem Speicherchip vorzusehen ist es auch möglich, die Speichermittel als separate Speicherchips auszubilden, da Speicherchips und entsprechende Lese- und Schreibvorrichtungen kostengünstig herstellbar sind.

Erfindungsgemäß ist vorgesehen, daß das Identifizierungselement ein Smartlabel ist.

Smartlabel (die auf der sogenannten RFID-Technologie beruhen) sind in der Regel als Transponder ausgebildet, die über relativ kurze Entfernungen einen Datenaustausch ermöglichen und beispielsweise in Form eines Etiketts platzsparend und nicht sichtbar getragen werden können.

Hierbei ist es zweckmäßig, daß das Smartlabcl am Körper des Nutzungsberechtigten der Speicherkarte oder an dessen Kleidung, Schmuck, Brille oder Uhr, vorzugsweise nicht optisch wahrnehmbar befestigt ist.

Smartlabel können beispielsweise implantiert werden oder aber an dem Körper oder an der Kleidung, dem Schmuck, der Brille oder Uhr getragen werden, wobei für Dritte nicht erkennbar ist, ob und wo ein Smartlabel angebracht ist, so daß ein gezielter Diebstahl eines Kleidungsstücks mit dem Smartlabel auch nicht möglich ist.

Im Rahmen der Erfindung liegt auch ein Verfahren zum Abfragen von Informationen von einer Speicherkarte mit ersten und zweiten Speichermitteln, gekennzeichnet durch folgende Verfahrensschritte:
- Abfragen der Informationen eines von dem Nutzungsberechtigten getragenen Identifizierungselementes
- Vergleichen dieser Informationen mit auf dem zweiten Speichermittel gespeicherten Informationen
- Freigabe zum Datenaustausch des ersten Speichermittels durch das zweite Speichermittel, wenn die Informationen des Identifizierungselementes mit denen des zweiten Speichermittels korrelieren, oder
- Nichtfreigabe zum Datenaustausch des ersten Speichermittels durch das zweite Speichermittel, wenn die Informationen des Identifizierungselementes mit denen des zweiten Speichermittels nicht korrelieren oder keine Informationen eines Identifizierungselementes empfangen werden. Hierbei ist es vorteilhaft, daß das erste und das zweite Speichermittel Speicherchips sind.

Ebenso ist es zweckmäßig, daß das Identifizierungselement ein Smartlabel ist.

Erfindungsgemäß ist vorgesehen, daß das Smartlabel am Körper des Nutzungsberechtigten der Speicherkarte oder an dessen Kleidung, Schmuck, Brille oder Uhr, vorzugsweise nicht optisch wahrnehmbar befestigt ist.

Eine Weiterbildung der Erfindung besteht darin, daß die Informationen des Identifizierungselementes verschlüsselt sind und vor dem Vergleichen mit auf dem zweiten Speichermittel gespeicherten Informationen entschlüsselt werden.

Dies erhöht die Sicherheit des Verfahrens.

Ein Ausführungsbeispeil der Erfindung wird nachfolgend anhand einer Zeichnung beschrieben.

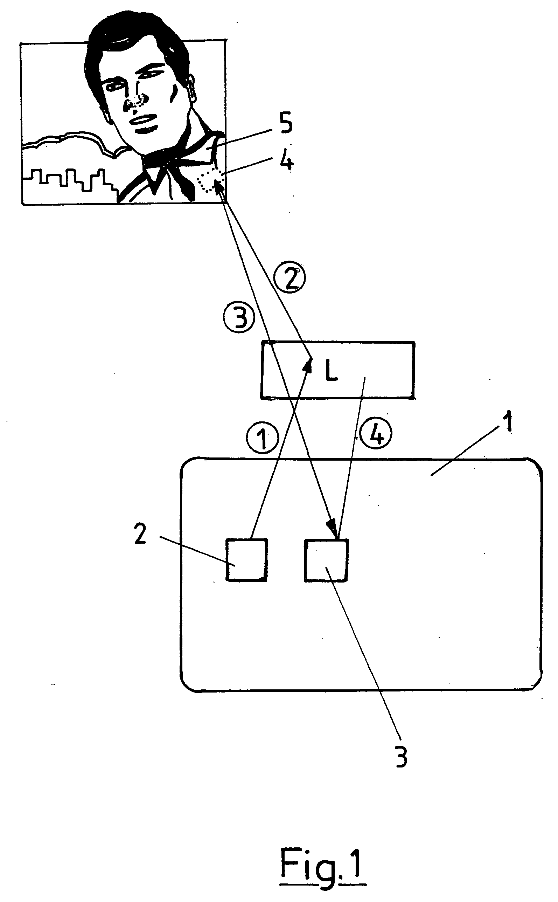

Es zeigt
- Fig. 1: eine schematische Darstellung der Funktionsweise einer erfindungsgemäßen Vorrichtung.

Wie in Fig. 1 dargestellt, weist die erfindungsgemäße Speicherkarte 1 ein erstes Speichermittel 3 und ein zweites Speichermittel 2 auf, die im vorliegenden Beispiel beide als Speicherchips ausgebildet sind. Es wäre auch möglich, die beiden Speichermittel auf einem Speicherchip vorzusehen.

Auf dem ersten Speichermittel 3 sind die relevanten, personenbezogenen Daten (z.B. für die Abwicklung eines Zahlungsvorganges erferderliche Daten oder persönliche Daten) gespeichert. Auf dem zweiten Speichermittel 2 sind Daten, die eine Authentisierung ermöglichen, gespeichert.

Fig. 1 zeigt den Ablauf bei Einleitung einer Nutzung der Karte, sei es bei Geld- oder Kreditkarten ein Bezahlvorgang oder eine Kontoabfrage, oder ein Abruf bzw. eine Änderung einer Information bei Karten mit Informationen zu dem Nutzungsberechtigten der Speicherkarte (z.B. Krankenkarte mit Krankendaten, Personalausweis). Hierzu wird die Speicherkarte in bekannter Weise in ein Lesegerät eingeführt, das zunächst nur auf das zweite Speichermittel 2 zugreifen kann, über das die identitätsprüfung erfolgt. Der Zugriff auf das erste Speichennittel 3 ist zu diesem Zeitpunkt noch gesperrt.

Das zweite Speichermittel 2 tritt über das Lesegerät L in Kommunikation mit einem Identifizierungselement 4, das im vorliegenden Fall als Smartlabel 4 ausgebildet ist, welches der Nutzungsberechtigte 5 der Speicherkarte 1 an seinem Körper, im vorliegenden Fall unter dem Hemd auf oder unter der Haut, trägt (Schritte (1) und (2)). Das Smartlabel 4 ist somit für Dritte unsichtbar.

Ist der Nutzungsberechtigte in ausreichender Nähe zu der Karte, um das Transpondersignal seines Smartlabels 4 durch die Speicherkarte 1 erfassen zu können, wird zunächst die auf dem Smartlabel gespeicherten Identifikation, die von der Speicherkarte 1 empfangen wurde mit der auf dem zweiten Speichermittel 2 gespeicherten verglichen und bei Korrelation das erste Speichermittel 3 durch das zweite Speichermittel 2 zum Datenaustausch freigegeben (Schritt (3)). Es kann somit ein Datenaustausch zwischen dem ersten Speichermittel 3 und dem Lesegerät L erfolgen (Schritt (4)). Wird keine Korrelation festgestellt, erfolgt keine Freigabe des ersten Speichermittels (3) zum Datenaustausch.

Zur Erhöhung der Sicherheit ist es hierbei vorteilhaft daß die Informationen des Identifizierungselementes verschlüsselt sind und vor dem Vergleichen mit auf dem zweiten Speichermittel gespeicherten Informationen entschlüsselt werden.

Der Datenaustausch, der ein reiner Lese- oder ein Lese-Schreib-Zugriff sein kann, erfolgt dann in bekannter Weise.

Ist der Vergleich der empfangenen Identifikationen negativ oder werden überhaupt keine Identifikationen empfangen, so wird das erste Speichermittel 3 nicht freigegeben und es kann somit nicht auf die dort gespeicherten Daten zugegriffen werden.

Auf diese Weise ist sichergestellt, daß der Nutzungsberechtigte 5 der Speicherkarte 1 beim Abwickeln des jeweiligen Vorgangs präsent ist und nicht mit einer gestohlenen Speicherkarte Mißbrauch getrieben wird.

## Patentansprüche

1. Speicherkarte zum Speichern von Informationen mit einem ersten und einem zweiten Speichermittel, **dadurch gekennzeichnet, daß** Mittel zum Abfragen der Informationen eines von dem Nutzungsberechtigten getragenen Identifizierungselementes und Mittel zum Vergleichen dieser Informationen mit auf dem zweiten Speichermittel (2) gespeicherten Informationen vorgesehen sind und daß bei positiver Identitätsprüfung das erste Speichermittel (3) durch das zweite Speichermittel (2) zum Datenaustausch freischaltbar ist.

2. Speicherkarte gemäß Anspruch 1, **dadurch gekennzeichnet, daß** das erste (3) und das zweite Speichermittel (2) Speicherchips sind.

3. Speicherkarte gemäß Anspruch 1, **dadurch gekennzeichnet, daß** das Identifizierungselement (4) ein Smartlabel ist.

4. Speicherkarte gemäß Anspruch 3, **dadurch gekennzeichnet, daß** das Smartlabel (4) am Körper des Nutzungsberechtigten (5) der Speicherkarte (1) oder an dessen Kleidung, Schmuck, Brille oder Uhr, vorzugsweise nicht optisch wahrnehmbar befestigt ist.

5. Verfahren zum Abfragen von Informationen von einer Speicherkarte mit ersten und zweiten Speichermitteln, **gekennzeichnet durch** folgende Verfahrensschritte:
- Abfragen der Informationen eines von dem Nutzungsberechtigten getragenen Identifizierungselementes (4)
- Vergleichen dieser Informationen mit auf dem zweiten Speichermittel (2) gespeicherten Informationen
- Freigabe zum Datenaustausch des ersten Speichermittels (3) **durch** das zweite Speichermittel (2), wenn die Informationen des Identifizierungselementes (4) mit denen des zweiten Speichermittels (2) korrelieren, oder
- Nichtfreigabe zum Datenaustausch des ersten Spcichermittels (3) **durch** das zweite Speichermittel (2), wenn die Informationen des Identifizierungselementes (4) mit denen des zweiten Speichermittels (2) nicht korrelieren oder keine Informationen eines Identifizierungselementes (4) empfangen werden.

6. Verfahren gemäß Anspruch 5, **dadurch gekennzeichnet, daß** das erste (3) und das zweite Speichermittel (2) Speicherchips sind.

7. Verfahren gemäß Anspruch 5, **dadurch gekennzeichnet, daß** das Identifizierungselement (4) ein Smartlabel ist.

8. Verfahren gemäß Anspruch 7, **dadurch gekennzeichnet, daß** das Smartlabel (4) am Körper des Nutzungsberechtigten (5) der Speicherkarte (1) oder an dessen Kleidung, Schmuck, Brille oder Uhr, vorzugsweise nicht optisch wahrnehmbar befestigt ist.

9. Verfahren gemäß Anspruch 5, **dadurch gekennzeichnet, daß** die Informationen des Identifizierungselementes verschlüsselt sind und vor dem Vergleichen mit auf dem zweiten Speichermittel gespeicherten Informationen entschlüsselt werden.
